# EUROPÄISCHE PATENTANMELDUNG

(11) **EP 2 009 426 A2**
(43) Veröffentlichungstag der Anmeldung: **31.12.2008**
(21) Anmeldenummer: 08010459.9
(22) Anmeldetag: 09.06.2008
(51) Int. Cl.: G01N 21/95, B24B 49/12

(54) **Verfahren zum Bearbeiten eines Substrats**

(30) Priorität: 27.06.2007 DE 102007029666
(71) Anmelder: Fraunhofer-Gesellschaft zur Förderung der Angewandten Forschung e.V., 80686 München (DE)
(72) Erfinder: Berwian, Patrick, 91052 Erlangen (DE); Friedrich, Jochen, 90542 Eckental (DE)
(74) Vertreter: Schenk, Markus

(57) **Zusammenfassung**

Es wird ein Verfahren (700) zum Bearbeiten eines Substrats aus einem Substratmaterial beschrieben, wobei das Bearbeiten zu Defekten in dem Substratmaterial führt, mit: Durchführen (710) einer Transmissionsmessung an dem Substrat, um einen Transmissionswert zu erhalten, der ein Maß für die Defekte in dem Substratmaterial ist; und Steuern (720) des Bearbeitens des Substrats abhängig von dem Transmissionswert.

## Beschreibung

Die vorliegende Erfindung bezieht sich auf ein Verfahren zum Bearbeiten eines Substrats, wie sie beispielsweise bei zumindest teilweise lichtdurchlässigen Substraten verwendet werden kann.

Sowohl bei der Herstellung von Werkstoffen oder Bauteilen als auch durch Bearbeitungsprozesse, sei es mittels mechanischer, physikalischer, chemischer, thermischer Verfahren oder deren Kombination, werden im allgemeinen Materialschädigungen im Werkstoffvolumen bzw. im Substrat hervorgerufen, entweder mehr oder weniger homogen im gesamten Werkstoff oder an den Oberflächen konzentriert.

Solche Materialschäden sind typischerweise unerwünscht. Wünschenswert sind daher Verfahren, die solche Materialschäden vermeiden können oder eine Entfernung solcher Materialschäden auf effiziente Weise ermöglichen.

### Zusammenfassung

Ein Ausführungsbeispiel der vorliegenden Erfindung schafft ein Verfahren zum Bearbeiten eines Substrats aus einem Substratmaterial, wobei das Bearbeiten zu Defekten in dem Substratmaterial führt, mit: Durchführen einer Transmissionsmessung an dem Substrat, um einen Transmissionswert zu erhalten, der ein Maß für die Defekte in dem Substratmaterial ist; und Steuern des Bearbeitens des Substrats abhängig von dem Transmissionswert.

Ausführungsbeispiele des vorliegenden Verfahrens ermöglichen eine in-situ und/oder ex-situ Messung der Lichtabsorption bzw. Lichttransmission zur Quantifizierung der Materialdefekte bei Bearbeitungsprozessen.

Ausführungsbeispiele des vorliegenden Verfahrens ermöglichen die Analyse und Kontrolle, aber auch die direkte Steuerung oder Regelung der Bearbeitungs- oder Materialsyntheseprozesse. Dies ermöglicht eine Vereinfachung, Beschleunigung und damit auch Verbesserung und Kostenreduktion sowohl der Prozessentwicklung im Bereich der Forschung und Entwicklung (F&E) als auch der Prozessierung im Bereich der Produktion.

Unter dem Begriff Bearbeiten eines Substrats wird im Folgenden sowohl das Herstellen des Substrats selbst, z. B. durch Aufwachsen im Halbleiterbereich, als auch das Bearbeiten eines zuvor hergestellten Substrats, beispielsweise das Polieren eines zuvor durch Aufwachsen hergestellten Substrats, verstanden.

### Kurzbeschreibung der Figuren

Ausführungsbeispiele der vorliegenden Erfindung werden nachfolgend unter Bezugnahme auf beiliegende Zeichnungen näher erläutert.
- Fig. 1: zeigt einen beispielhaften schematischen TEM-Querschnitt (TEM - Transmissions-Elektronenmikroskopie) mit 9 µm diamantpolierter GaN-Schicht;
- Fig. 2: zeigt Transmissionskurven einer GaN-Probe direkt nach der Herstellung ("wie gewachsen") und nach verschiedenen Präparationsstufen mit 9 µm und 3 µm Korngröße;
- Fig. 3: zeigt Transmissionskurven einer GaN-Probe aus Fig. 2 nach weiteren Zeitintervallen bzw. Präparationsstufen mit 1 µm Diamantpolitur;
- Fig. 4: zeigt eine beispielhafte Entwicklung der Transmission bei 375 nm Wellenlänge im Verlauf verschiedener Polierprozesse;
- Fig. 5: zeigt die Änderungen der Lichttransmission verschiedener Proben im Vergleich zweier Polierprozesse A und B;
- Fig. 6: zeigt Transmissionskurven einer GaN-Probe direkt nach Herstellung (wie gewachsen) und nach verschiedenen Politurschritten bis hin zu 0,1 µm Polierkorn;
- Fig. 7: zeigt ein Flussdiagramm eines Ausführungsbeispiels eines Verfahrens zum Bearbeiten eines Substrats;
- Fig. 8A: zeigt ein detaillierteres Flussdiagramm eines Ausführungsbeispiels eines Verfahrens zum Bearbeiten eines Substrats;
- Fig. 8B: zeigt ein weiteres detaillierteres Flussdiagramm eines Ausführungsbeispiels eines Verfahrens zum Bearbeiten eines Substrats;
- Fig. 9A: zeigt eine Prinzipdarstellung eines Ausführungsbeispiels mit einer ex-situ Transmissionsmessung eines Substrats;
- Fig. 9B: zeigt eine Prinzipdarstellung eines Ausführungsbeispiels mit einer in-situ Transmissionsmessung eines Substrats.

Bevor im Folgenden die vorliegende Erfindung anhand der beiliegenden Zeichnungen näher erläutert wird, wird darauf hingewiesen, dass die Zeichnungen zur besseren Verständlichkeit nicht maßstabsgerecht ausgeführt sind. Zudem werden für Objekte und für Funktionseinheiten, die gleiche oder ähnliche funktionelle Eigenschaften aufweisen, gleiche Bezugszeichen verwendet, wobei eine wiederholte Beschreibung dieser Objekte und Funktionseinheiten weggelassen wird. In diesem Zusammenhang wird ferner darauf hingewiesen, dass einerseits, sofern es nicht explizit anders angegeben ist, Abschnitte, die sich auf Objekte mit ähnlichen oder gleichen Funktionaleigenschaften beziehen, zwischen den Beschreibungen der verschiedenen Ausführungsbeispiele austauschbar sind. Andererseits wird darauf hingewiesen, dass durch eine gemeinsame Verwendung eines Bezugszeichens ein Objekt, das in mehr als einem Ausführungsbeispiel auftritt, nicht gezeigt ist, dass diese in den verschiedenen Ausführungsbeispielen oder dem betreffenden Ausführungsbeispiel identische Merkmale und Eigenschaften aufweisen. Gemeinsame oder ähnliche Bezugszeichen stellen also keine Aussage bezüglich der konkreten Auslegung oder Dimensionierung dar.

Bevor Ausführungsbeispiele der vorliegenden Erfindung im Detail beschrieben werden, werden zum besseren Verständnis die Herstellung bzw. Bearbeitung von Substraten insbesondere in der Opto- oder Mikroelektronik beschrieben, und die Erkenntnisse die zu den Ausführungsbeispielen der vorliegenden Erfindung geführt haben.

Ausführungsbeispiele des Verfahrens ermöglichen sowohl ex-situ als auch in-situ während des Herstellungs- oder Bearbeitungsprozesses eines Werkstoffs oder Bauteils auf einfache Weise den Grad der Materialschäden zu analysieren bzw. die Materialschäden zu quantifizieren. Ausführungsbeispiele des Verfahrens beruhen auf dem Effekt, dass die LichtAbsorption sowohl im sichtbaren Bereich als auch im infraroten (IR) oder ultravioletten (UV) Bereich vieler Materialien durch Gitterschädigung im Vergleich zum Defektmaterial erhöht ist bzw. die Lichttransmission reduziert ist.

Beispiele für Werkstücke, bei denen Materialschäden besonders kritisch für die weitere Verwendung sind, sind Halbleiterscheiben für die Opto- oder Mikroelektronik. Sowohl bei der Herstellung des Materials, z.B. der sog. "Züchtung" des Materials, als auch bei dessen Bearbeitung zu Scheiben, auch als *"Wafering"* bezeichnet, und der Oberflächenpolitur, auch als *"Polishing"* bezeichnet, kommt es zur Materialschädigung. Im Folgenden wird detaillierter auf das *Wafering* und *Polishing* eingegangen.

Die hierbei eingesetzten Prozesse, v. a. mechanische Verfahren wie Sägen, Schleifen, Läppen oder Polieren, sollen, neben weiteren sekundären Spezifikationen, primär Oberflächen mit geringer Rauheit und perfektem Kristallgitter erzeugen. Die oberflächennahen Bereiche des Kristallgitters sollen somit durch die einzelnen Prozessschritte möglichst wenig gestört werden, bzw. die eingebrachten Störungen durch nachfolgende Bearbeitungsschritte wieder aus dem Material entfernt werden. Oftmals ist das Hauptproblem der Oberflächenpräparation von Halbleitern nicht, eine geringe Rauheit zu erreichen, sondern die Vermeidung oder Entfernung von oberflächennahen Gitterschädigungen, den sog. *"Subsurface-Damages".*

Eine Minimierung der im Material eingebrachten Gitterschäden wäre im Prinzip durch ausschließliche Verwendung sehr feinkörniger Poliermittel möglich, was jedoch durch niedrige Abtragsraten sehr hohe Prozessdauern und -kosten zur Folge hätte.

Stattdessen werden üblicherweise mehrere aufeinander folgende Polierschritte mit immer feinerem Poliermittel durchgeführt, wobei in jedem Schritt die Schädigung der vorhergehenden Politur möglichst weitgehend wieder entfernt wird. So kann am Ende einer Kette immer feinerer Polituren das Material schließlich nahezu defektfrei sein. Ein unzureichender Abtrag eines einzigen Polierschritts kann wegen der deutlich geringeren Abtragsraten aller folgenden Schritte nicht mehr ausgeglichen werden. Andererseits müssen die einzelnen Polierschritte aus Kostengründen zeitlich minimiert werden.

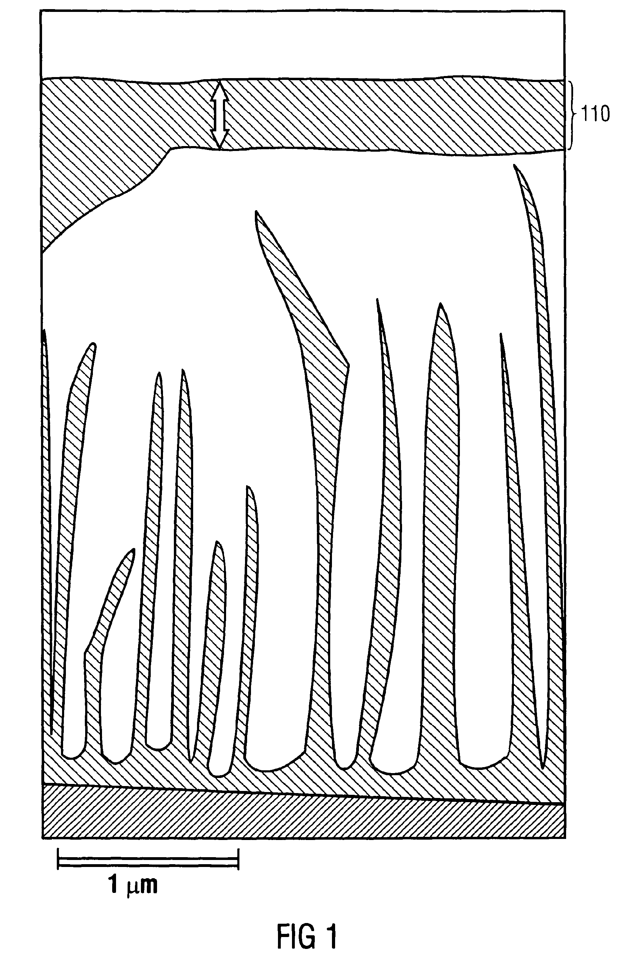

Diese Optimierung jeder einzelnen Polierschritt-Dauer erfordert somit eine genaue Quantifizierung der oberflächennahen Gitterschädigungen. Die beim Polieren entstehende Gitterschädigung kann durch Transmissions-Elektronenmikroskopie (TEM) dargestellt werden. Als Beispiel ist in Fig. 1 schematisch ein TEM-Querschnitt einer mit 9 µm Diamant polierten GaN-Schicht dargestellt. Die Probenoberfläche befindet sich an der Oberseite des Bildes. Darunter kann eine stark geschädigte Schicht 110 (s. weißer Doppelpfeil) durch die dunkle Darstellung der mechanisch induzierten Versetzungen deutlich von dem mechanisch unbeschädigten GaN-Volumen (helle Bereiche) abgegrenzt werden, in welchem nur relativ wenige Versetzungen aus dem Züchtungsprozess vorliegen. Die Dicke der oberflächennahen Schicht, die auch als *"Sub-Surface Layer"* bezeichnet wird, liegt bei etwa 400 nm, erreicht stellenweise aber bis zu 1 µm.

TEM Analysen sind somit zur Beurteilung der Politurschäden hervorragend geeignet, jedoch für eine umfassende Optimierung von Polierprozessen zu aufwendig, nicht in den Prozessablauf integrierbar und destruktiv.

Will man sich nicht auf die rein empirische Prozessentwicklung stützen, muss ein alternatives Verfahren gefunden werden. Ausführungsbeispiele der vorliegenden Erfindung ermöglichen daher beispielsweise eine rationelle quantitativen Analyse von Politurdefekten in Halbleitern.

Neben der Tatsache, dass bei vielen Materialien chemomechanische Politurmittel eingesetzt werden können, bei denen nur geringe mechanische Gitterschädigungen verursacht werden, ist eine Ursache für ein rein empirisches Vorgehen hier vermutlich, dass in üblichen Halbleitern jeder einzelne Polierschritt wegen der hohen Abtragsraten und der großen Materialdicken problemlos lange genug, d.h. mit ausreichender Sicherheitsreserve durchgeführt werden kann. In der Regel genügen dort wenige Minuten pro Polierschritt um sicherzustellen, dass die Schäden der vorherigen Polituren vollständig entfernt sind.

Ein Material wie z.B. Gallium-Nitrid (GaN) erfordert dagegen deutlich längere Polierschritte. Dies liegt zum einen daran, dass GaN ein sehr hartes Material ist und eine rein mechanische Politur entweder sehr geringe Abtragsraten aufweist oder alternativ sehr große Schädigungen ins Material einbringt, welche wieder zeitaufwendig entfernt werden müssen. Zum anderen ist der Einsatz chemischer Zusätze zum Poliermittel zur Reduzierung der mechanischen Materialschädigung (mechanischer Abtrag wird hier durch chemischen Abtrag ergänzt) und zur Erhöhung der Abtragsraten wegen der chemischen Beständigkeit des GaN kaum wirksam.

Aus diesen Gründen stellt die Minimierung der Politurdauern von GaN einen wichtigen Kostenfaktor der Bearbeitung dar. Liegen, wie bei den heutigen Herstellungsverfahren von GaN üblich, nur dünne Schichten von wenigen µm Dicke vor, ist es wünschenswert, auch aus Gründen der Effizienz der Schichtherstellung, eine möglichst sparsame Politur verwenden zu können, um aufwendig synthetisiertes Material nicht unnötig in der Oberflächenpräparation zu entfernen.

Gallium-Nitrid Schichten (GaN), die direkt nach der Materialsynthese gut transparent sind weisen nach der Politur eine deutliche Gelbfärbung auf. Dies ist auf die mechanisch induzierte Störung des Kristallgitters zurückzuführen. Ungeschädigtes GaN absorbiert wegen seiner großen Bandlücke sichtbares Licht kaum, sondern nur Wellenlängen unter 360 nm.

Materialien direkt nach der Herstellung, z.B durch Aufwachsen, werden allgemein auch als "wie gewachsen" bzw. "wie gezüchtet" oder im Englischen als *"as-grown"* bezeichet.

Die Politur führt nun zur Bildung von Versetzungen bzw. teilweisen Amorphisierung der Probenoberfläche und erzeugt innerhalb der Bandlücke des Halbleiters Störstellen, die zu einer Absorption längerwelliger Strahlung führen, wobei die Absorption mit zunehmender Wellenlänge abnimmt. Durch die Absorption des blauen Lichtanteils erscheint die Probe gelblich verfärbt.

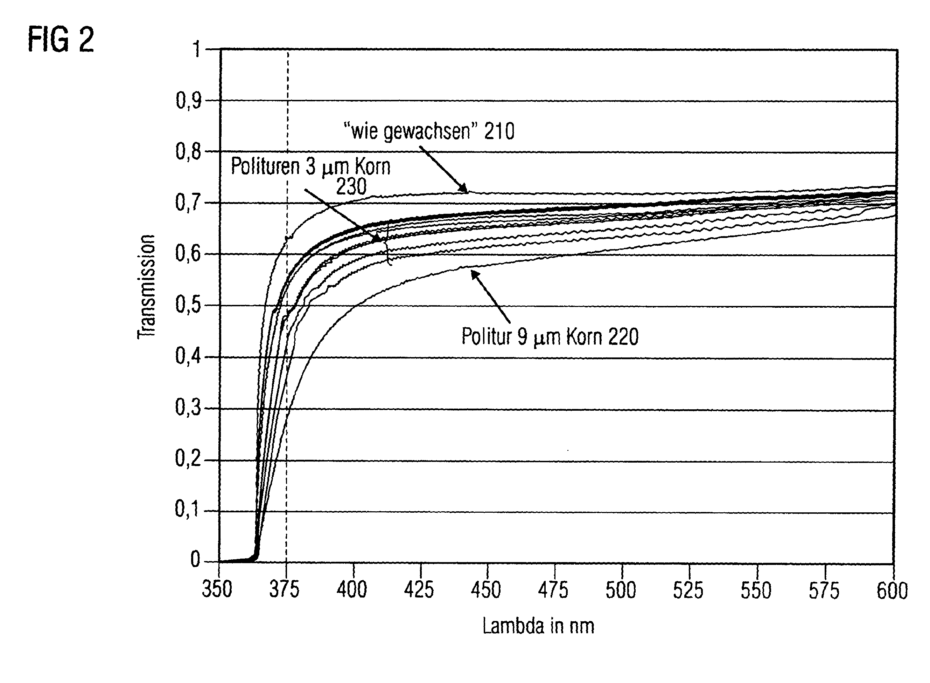

Mit Hilfe eines Spektralphotometers lässt sich dieser Effekt quantifizieren. Fig. 2 zeigt den Verlauf verschiedener Transmissionskurven einer GaN-Probe direkt nach der Herstellung ("wie gewachsen") und für Polituren mit 9 µm und 3 µm Korn. Dabei ist der Transmissionswert von 0 - 1 bzw. von 0 % bis 100 % über der Wellenlänge λ (Lambda) in nm aufgetragen. Der Transmissionswert 1 bedeutet dabei keine Absorption und der Transmissionswert 0 bedeutet vollständige Absorption. Die Kurven wurden mittels eines Spektralphotometers erstellt.

In Fig. 2 ist die Entwicklung der Transmission am Beispiel einer GaN-Probe nach verschiedenen Präparationsstufen dargestellt. Diese spezielle "wie gewachsen" Probe, d.h. Probe vor dem Polierprozess, zeigt unterhalb von etwa 360 nm die fast vollständige Absorption des Lichts, siehe Transmissionskurve 210. Bis 375 nm nimmt die Transmission der Probe rasch auf etwa 65 % zu, um sich bei noch höheren Wellenlängen einem Wert um 75 % anzunähern.

Poliert man diese Probe beispielsweise mit 9 µm Diamantkorn, so verringert sich die Transmission bei hohen Wellenlängen geringfügig auf etwa 70 % bzw. 0,7 (bei 600 nm), die kurzwellige Transmission nimmt dagegen deutlich ab (28 % bzw. 0,28 bei 375 nm), siehe Transmissionskurve 220. Poliert man die Probe anschließend kurzzeitig mit 3 µm Korn, so trägt man den am stärksten gestörten Materialbereich, nämlich die Oberflächen der GaN-Schicht, ab, wodurch die Transmission der Schicht wieder zunimmt. Weitere Politur mit 3 µm Korn verbessert die Transmission sukzessive, siehe Transmissionskurve 230.

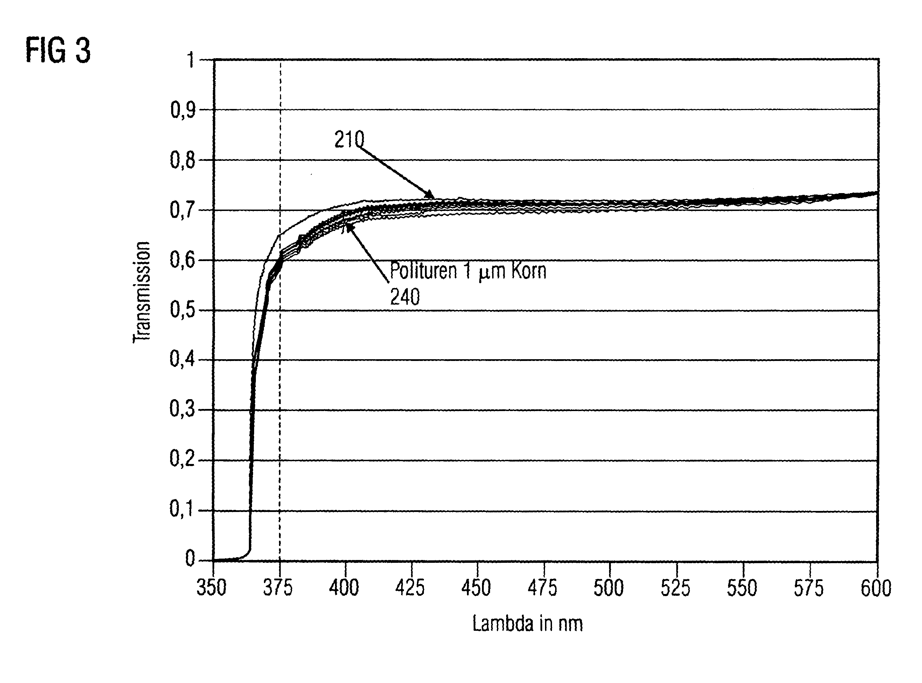

Allerdings bringt diese 3 µm-Politur selbst wieder Materialschäden in die Schicht ein. So wird schließlich ein Zustand erreicht, bei dem durch den Oberflächenabtrag genau so viele Defekte der 9 µm Politur aus der Probe entfernt werden, wie durch die 3 µm-Politur wieder in das Material eingebracht werden, weshalb keine weitere Materialverbesserung erzielbar ist. Dies ist dann der Fall, wenn durch 3 µm-Politur das Material etwa bis in die Schädigungstiefe der 9 µm Politur abgetragen worden ist. In Fig. 2 ist dies daran zu erkennen, dass man sich nach mehreren kurzen 3 µm-Polierintervallen asymptotisch an eine Transmissionskurve annähert, die noch deutlich vom "wie gewachsen" Zustand 210 mit nahezu ungestörtem Gitter abweicht. Hat man diesen Gleichgewichtszustand erreicht, so kann nur die Verwendung eines feineren Poliermittels, mit z.B. 1 µm Korngröße, mit seiner geringeren Materialschädigung die GaN-Schicht weiter verbessern, siehe Transmissionskurve 240 in Fig. 3.

Fig. 3 zeigt die Transmissionskurven der GaN-Probe aus Fig. 2 nach weiteren Zeitintervallen mit 1 µm Diamantpolitur.

Die Poliermittel werden schließlich sukzessive so weit verfeinert, bis die Oberflächendefekte (Subsurface-Damages) weitgehend entfernt sind.

Wie aus den Fig. 2 und 3 ersichtlich, liegt die Bandgrenze von GaN bei ca. 360 nm, d. h. Licht mit Wellenlängen von 360 nm und kleiner werden vollkommen absorbiert, während die Absorption in einem Bereich von 360 nm bis 400 nm im Fall der "wie gewachsen" Transmissionskurve 210 sehr schnell auf den Wert 0,7 ansteigt und für Wellenlängen über 400 nm nur noch geringfügig ansteigt.

Aus den Fig. 2 und 3 ist ferner ersichtlich, dass mit abnehmender Korngröße sich die Transmissionskurven 220, 230 und 240 immer mehr an die Transmissionskurve 210 annähern, wobei gegenüber der Transmissionskurve 210 die Unterschiede gerade im Bereich von ca. 365 nm bis ca. 450 nm am größten sind, und generell mit zunehmender Wellenlänge die Unterschiede in den Verläufen der Transmissionskurven für die Polituren der verschiedenen Korngrößen 220, 230 und 240 und der "wie gewachsen" Transmissionskurve 210 immer geringer werden.

Die Transmission bei einer Wellenlänge knapp oberhalb der Bandlücke kann als Maß für die Defektmenge im GaN dienen. Als Messgröße wurde im Folgenden die Transmission bei 375 nm Wellenlänge herangezogen. Dies liegt ausreichend nahe an der Bandkante des GaN um deutlich durch die Politur beeinflusst zu werden, ist aber bereits außerhalb des steilsten Bereichs der Wellenlängenabhängigkeit, so dass keine allzu großen Messfehler durch Abweichungen der gemessenen Wellenlänge vom Sollwert zu erwarten sind.

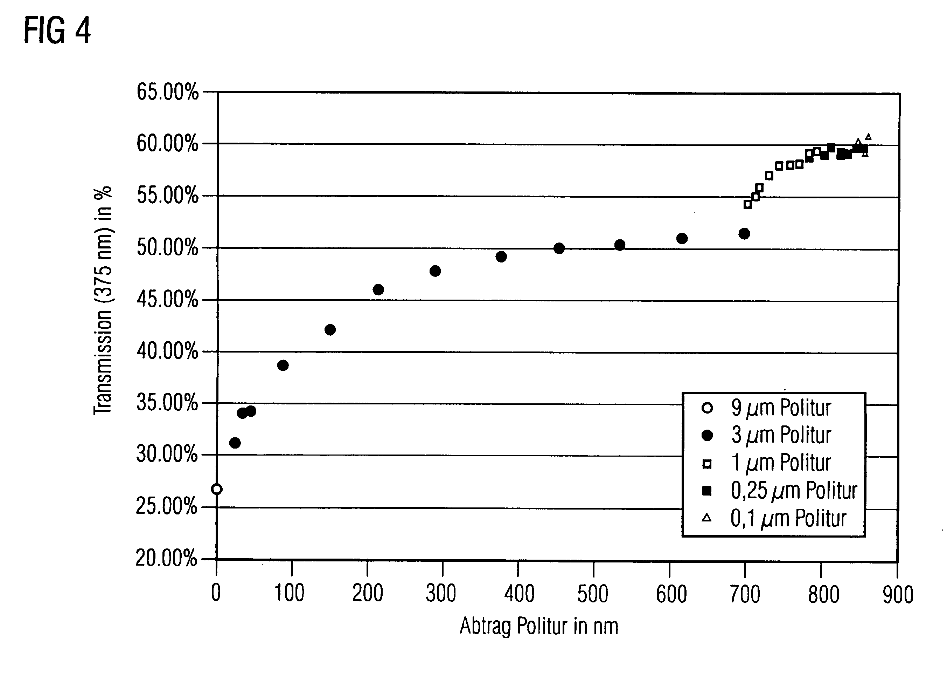

In Fig. 4 ist die Entwicklung dieser Probentransmission im Verlauf des Materialabtrags bei Polituren abnehmender Körnungen dargestellt. Die Abszisse der Darstellung bezeichnet den akkumulierten Politurabtrag ab Beginn der 9 µm-Politur und wurde durch Wiegen der Probe ermittelt.

Man erkennt, dass nach der 9 µm-Politur die Transmission bei der 3 µm-Politur rasch zunimmt und schließlich in eine Sättigung übergeht, siehe flacher Kurvenverlauf nach 9 Polierprozessschritten mit 3 µm-Politur bzw. nach einem Abtrag von ca. 450 nm. Anschließend wird das Polierkorn gewechselt. Die 1 µm-Politur erhöht die Transmission weiter und erreicht selbst wieder einen Sättigungswert, siehe flacher Kurvenverlauf nach ca. 8 Polierprozessen mit 1 µm-Politur bzw. nach einem Abtrag von ca. 780 nm.

Jeder einzelne Polierschritt kann nun sehr einfach optimiert werden. So wird z. B. deutlich, dass bei der 9 µm-Politur nicht 700 nm abgetragen werden müssen, wie dies in Fig. 4 nach 12 Polierprozessschritten mit 3 µm-Politur dargestellt ist, sondern nur etwa 400 - 500 nm, und darüber hinaus auch durch weitere Polierprozessschritte mit 3 µm-Politur keine erkennbare Materialverbesserung mehr eintritt. Dies bedeutet andererseits, dass die vorhergehende 9 µm-Politur eine Schädigungstiefe von etwa 400 - 500 nm aufwies, was den oben gezeigten TEM Analysen, siehe Fig. 1, entspricht.

Das Analyseverfahren ist damit insbesondere dazu geeignet, Polierprozesse rasch an neue Parameter anzupassen, wie beispielsweise Probendurchmesser, Fabrikat der Poliersuspensionen und -tücher oder Anpressdrucke, die alle sowohl die Abtragsraten als auch die Dicke der eingebrachten Defektschicht beeinflussen. Der Aufwand bei der Weiterentwicklung von Politurprozessen, der Evaluierung alternativer Poliermittel u. ä. wird somit deutlich reduziert. Damit können beispielsweise auch effizient Daten bzw. die oben genannten Prozessparameter für rein empirische Verfahren gewonnen werden.

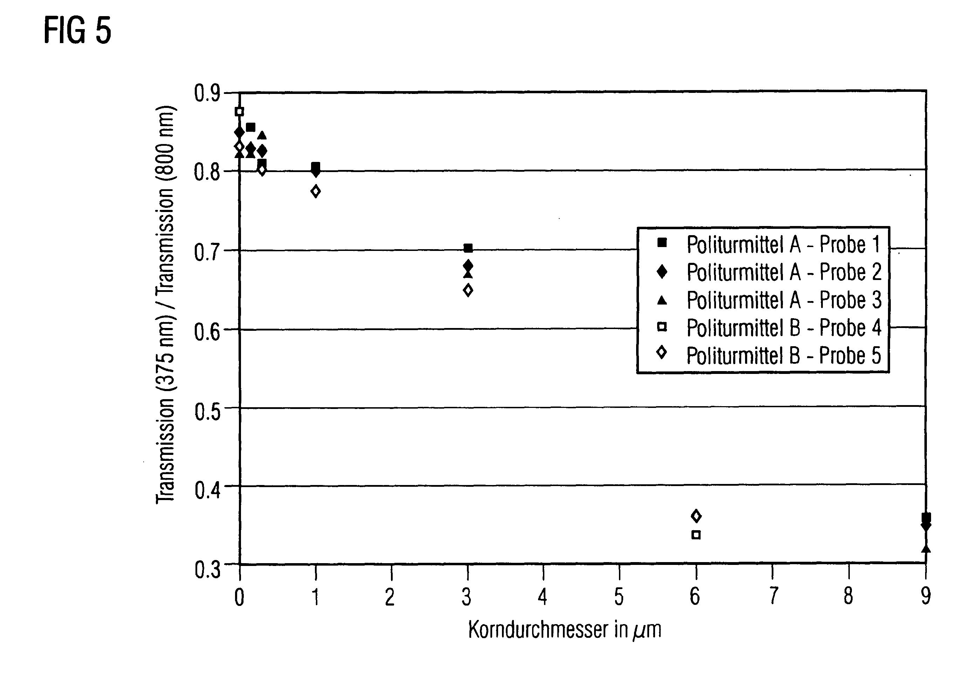

In der folgenden Fig. 5 ist beispielsweise die Auswirkung unterschiedlicher Poliermittel auf die Oberflächendefekte (Subsurface-Damages) dargestellt. Fig. 5 zeigt Änderungen der Lichttransmission (x-Achse) verschiedener Proben im Vergleich zweier Polierprozesse A (Proben 4 und 5) und B (Proben 1 bis 3). Beide Prozesse umfassen mehrere Politurschritte mit immer kleineren Körnungen. Zur besseren Vergleichbarkeit der verschiedenen Proben wurden die Transmissionswerte bei 375 nm durch die Transmissionswerte bei 800 nm dividiert. Hierdurch werden alle Probeneigenschaften, welche wellenlängenunabhängig die Transmission beeinflussen, von der defektinduzierten bandkantennahen Absorption getrennt und die Defektquantifizierung somit verbessert.

Wie in Fig. 5 zu sehen, weist das Poliermittel B (Proben L L1942 und L1945) gegenüber dem Poliermittel A (Proben L1932 - L1935) verschiedene Vorteile auf.

Andererseits muss bei Politur B nach Angaben des Herstellers eventuell eine größere Probenrauheit als bei A in Kauf genommen werden. Die Absorptionsuntersuchungen zeigen jedoch, dass die entstehenden Oberflächendefekte in GaN-Schichten bei Poliermittel B mit der bisherigen Politur A vergleichbar sind, wenn die Prozessparameter der Politur entsprechend angepasst werden. Mit Hilfe der für diese Anpassung genutzten Absorptionsanalysen konnte der GaN-Polierprozess somit problemlos und schnell auf das neue Poliermittel B umgestellt werden, sowohl bei der 6 µm Körnung als auch bei den weiteren Politurschritten. In Fig. 5 sind deshalb die Absorptionsdaten der GaN-Proben nach Bearbeitung mit dem neuen Politurmittel B bei allen Korndurchmessern vergleichbar mit Proben aus dem vorherigen Polierprozess A.

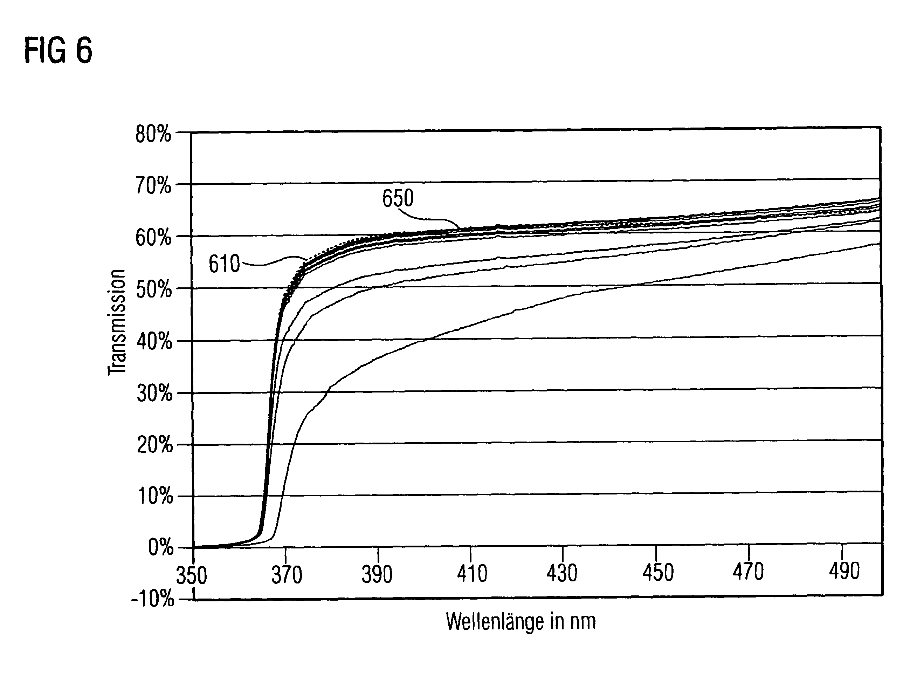

Das Endergebnis des entwickelten Politurprozesses in Bezug auf die spektrale Transmission der GaN-Schichten ist in Fig. 6 zu sehen. Fig. 6 zeigt Transmissionskurven einer GaN-Probe "wie gewachsen" 610 (gestrichelt, fett), nach verschiedenen Politurschritten (durchgezogen) bis hin zu 0,1 µm Polierkorn 650 (durchgezogen, fett).

Ausgehend vom "wie gewachsen" Zustand erreicht die Probe nach der erwähnten 6 µm Politur und mehreren weiteren Polierschritten schließlich wieder eine Transmission, die dem Ausgangszustand 610 "wie gewachsen" entspricht. Der Messfehler des Verfahrens kann so weit abgeschätzt werden, dass man unter der Annahme einer lateral homogenen Gitterschädigung von verbleibenden Störungstiefen (Damagetiefen) von unter 10 nm ausgehen kann.

Alternativ zur mechanischen Oberflächenpräparation ist es auch möglich, Gitterschäden des Halbleitermaterials durch thermisches Ausheilen zu entfernen. Experimente an Proben mit starken Oberflächenschäden (Subsurface-Damage), z.B. nach einer Politur mit 9 µm, weisen eine deutliche Verbesserung der Lichttransmission nach. Dies ist nur ein Beispiel für die Anwendung des Analyseverfahrens auf thermische Bearbeitungsprozesse.

Auch Herstellungsprozesse von Halbleitermaterialien können, beispielsweise durch Abweichungen in ihrer Zusammensetzung von der Stöchiometrie, Defekte erzeugen, welche durch Absorptionsmessungen quantifiziert werden können. Hier können Ausführungsbeispiele des vorliegenden Verfahrens eingesetzt werden, um gezielt die Materialherstellung zu optimieren.

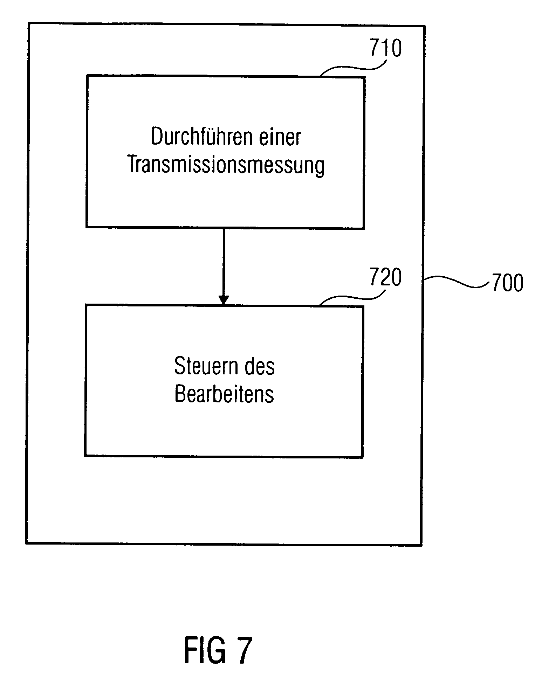

Fig. 7 zeigt ein Flussdiagramm eines Ausführungsbeispiels eines Verfahrens 700 zum Bearbeiten eines Substrats aus einem Substratmaterial, wobei das Bearbeiten zu Defekten in dem Substratmaterial führt.

In Schritt 710 wird eine Transmissionsmessung an dem Substrat durchgeführt, um einen Transmissionswert zu erhalten, der ein Maß für die Defekte in dem Substratmaterial ist.

In Schritt 720 wird das Bearbeiten des Substrats abhängig von dem Transmissionswert, der aus der Transmissionsmessung gewonnen wurde, gesteuert.

Dabei kann das Bearbeiten des Substrats die Herstellung des Substrats umfassen, z. B. das Aufwachsen bzw. Aufzüchten von Halbleitersubstraten, oder das Bearbeiten von zuvor hergestellten Substraten, z. B. das Polieren oder thermische Ausheilen umfassen.

In Ausführungsbeispielen des Verfahrens ist die Transmissionsmessung eine Lichttransmissionsmessung, bei der ein Lichttransmissionswert eines Lichts im Infrarotbereich, im sichtbaren Bereich und/oder im ultravioletten Bereich gemessen wird.

Dabei ist der Transmissionswert ein Maß für die Defekte bzw. ein Maß für eine Anzahl und/oder eine Tiefe der Defekte in dem Substrat.

Im folgenden wird, um Wiederholungen zu vermeiden, allgemein von Defekten bzw. von geringen oder hohen Defekten oder ähnlichem gesprochen. Diese Angaben beziehen sich - wie zuvor dargelegt - auf die Defekte bzw. die Anzahl und/oder Tiefe der Defekte.

In Ausführungsbeispielen des vorliegenden Verfahrens werden die Transmissionsmessungen in einem Spektralbereich durchgeführt, in dem der Transmissionswert umso höher ist, je geringer die Defekte in dem Substratmaterial sind, wie dies beispielsweise anhand der Fig. 2 bis 4 zuvor erläutert wurde.

Bei der Bearbeitung von Halbleitersubstraten, die eine Bandkante bzw. einen durchlässigen Bandbereich aufweisen, wird die Transmissionsmessung in einem Spektralbereich durchgeführt, der in Bezug auf die Wellenlänge oberhalb der Bandkante des Halbleitermaterials liegt. Die Position der Bandkante bzw. die Wellenlänge der Bandkante ist typischerweise abhängig von dem jeweiligen Halbleitermaterial des Halbleitersubstrats.

In weiteren Ausführungsbeispielen, bei denen das Substrat ein Halbleitermaterial mit einer Bandkante ist, wird die Transmissionsmessung in einem Spektralbereich durchgeführt, dessen Untergrenze die Bandkante ist und einen Wellenlängenbereich von 200 nm umfasst.

In wiederum weiteren Ausführungsbeispielen wird die Untergrenze des Spektralbereichs für die Transmissionsmessung als die Wellenlänge definiert, die 5 bzw. 10 nm höher als die Bandkante des Halbleitermaterials ist und der Bereich des Spektrums bzw. dessen Ausdehnung von der untergrenze ausgehend auf 150 bzw. 100 nm festgelegt.

In anderen Ausführungsbeispielen werden die Untergrenze und der Spektralbereich nicht absolut sondern relativ definiert, z.B. die Untergrenze als die Wellenlänge, die 0,1% oder 0,2% über der Bandkante des Halbleitermaterials liegt und der Bereich von dieser Untergrenze ausgehend eine Ausdehnung in nm von z.B. 40% bzw. 25% der Wellenlänge der Bandkante aufweist.

Darüber hinaus sind auch Kombinationen von absoluten und relativen Angaben zur Definition der Untergrenze und des Spektralbereichs möglich.

Diese Bereiche eignen sich besonders für die Quantisierung der Defekte, da diese nahezu außerhalb bzw. außerhalb des steilsten Bereichs der Wellenlängenabhängigkeit sind, siehe den Bereich zwischen 360 nm und 370 nm in Fig. 2, aber gleichzeitig ausreichend nah an der Bandkante sind, siehe Bandkante bei 360 nm in Fig. 2, und deutlich durch die Bearbeitung, beispielsweise Politur wie in Fig. 2 aber auch durch thermisches Ausheilen, beeinflusst zu werden, im Gegensatz zu den Wellenlängenbereichen wie beispielsweise bei 600 nm, bei denen die Transmission im Vergleich nur geringfügig durch die Bearbeitung beeinflusst wird.

Unabhängig davon kann die Transmissionsmessung in den vorgenannten Bereichen zusätzlich durch eine Transmissionsmessung im höheren Wellenlängenbereich, z. B. 800 nm wie in Fig. 5 dargestellt, normiert werden. Durch die Normierung werden die Substrateigenschaften, die wellenlängenunabhängig die Transmission beeinflussen, z. B. die Dicke des Substrats, die mit jedem Politurvorgang abnimmt, von der defektinduzierten bandkantennahen Absorption getrennt, so dass die Quantifizierung der Defekte weiter zu verbessert wird. Die Normierung besteht beispielsweise in der Division des oder der Transmissionswerte durch den zusätzlichen Transmissionswert, z.B. bei 800 nm, oder in der Subtraktion des zusätzlichen Transmissionswerts von den Transmissionswerten.

Bei Ausführungsbeispielen des vorliegenden Verfahrens kann das Bearbeiten und/oder Herstellen des Substrats auch zu einer Änderung der Dicke des Substratmaterials führen. In Ausführungsbeispielen des vorliegenden Verfahrens ist jedoch die Beeinflussung der Transmissionsmessung pro Zeiteinheit, d. h. beispielsweise pro Sekunde oder pro Dauer eines Bearbeitungszyklus, aufgrund der aus der Bearbeitung resultierenden Änderung der Defekte größer als die aufgrund der aus der Bearbeitung resultierenden Dickenänderung. Damit kann der Einfluss der Dickenänderung auf die Transmissionsmessung vernachlässigt werden, so dass Ausführungsbeispiele der vorliegenden Verfahren leicht zu realisierende und robuste Verfahren zur Messung der Defekte und zur Steuerung des Bearbeitungsprozesses bilden.

Dabei ist in bestimmten Ausführungsbeispielen des Verfahrens die aus der Bearbeitung resultierende Änderung der Defekte um mehr als einen Faktor 5 höher als die resultierende Änderung des Transmissionswerts aufgrund der Änderung der Dicke.

Wie zuvor dargelegt, können über eine Normierung in einem höheren Wellenlängenbereich, z. B. die zuvor genannten 800 nm, bei dem die Änderung des Transmissionswerts nahezu unabhängig von den Defekten ist, aber durch andere Parameter wie die Dickenänderung beeinflusst werden, der Einfluss der Dickenänderung oder anderer Einflüsse noch zusätzlich reduziert werden, und so das Verfahren noch robuster gestaltet werden.

Auch wenn in Fig. 5 für eine Normierung die Transmissionswerte bei 800 nm verwendet werden, so sind Ausführungsbeispiele der vorliegenden Erfindung nicht auf 800 nm beschränkt, sondern können auch bei geringeren Wellenlängen z. B. 500 oder 600 nm gewonnen werden oder auch bei höheren Wellenlängen. Die für die Normierung verwendeten Wellenlängen hängen von den spezifischen Eigenschaften des Substratmaterials ab

Allgemein kann zwischen einem ersten Wellenlängenbereich für die eigentliche Messung, der auch als Defektmessbereich bezeichnet werden kann, und einem zweiten Wellenlängenbereich für die Normierung, der auch als Normierungswellenlängenbereich bezeichnet werden kann, unterschieden werden. Dabei wird der erste Wellenlängenbereich - wie zuvor dargelegt - so gewählt, dass die Transmissionswerte möglichst nur von den Defekten abhängen bzw. die Änderung des oder der Transmissionswertes im wesentlichen nur von den Defektänderungen abhängen und möglichst unabhängig von anderen Parametern wie der Dickenänderungen sind. Dies sind beispielsweise die Bereiche niedrigerer Wellenlängen, und bei Halbleitermaterialien beispielsweise der Wellenlängenbereich ab bzw. geringfügig oberhalb der Bandgrenze. Der zweite Wellenlängenbereich wird - wie ebenfalls zuvor dargelegt - sozusagen nach den entgegengesetzten Kriterien gewählt, d.h. so gewählt, dass die Transmissionswerte bzw. die Änderung der Transmissionswerte möglichst wenig von den Defekten bzw. Defektänderungen abhängig sein sollen, und wenn überhaupt, von anderen Parametern, wie z. B. der Dicke bzw. Dickenänderung abhängig sein sollen.

In weiteren Ausführungsbeispielen des vorliegenden Verfahrens wird die Transmissionsmessung über einen gegebenen Spektralbereich durchgeführt und der Transmissionswert gemäß einer gegebenen Funktion, aus einer Vielzahl von Einzeltransmissionswerten oder einem Transmissionsspektrum ermittelt. Eine mögliche Funktion ist hierfür beispielsweise die Integration der Einzeltransmissionswerte bzw. des Transmissionsspektrums um den Transmissionswert für den gegebenen Spektralbereich zu erhalten.

In alternativen Ausführungsbeispielen des vorliegenden Verfahrens wird die Transmissionsmessung mit einer monochromatischen Lichtquelle durchgeführt, beispielsweise für GaN bei 375 nm, wie dies in den Fig. 2 bis 4 dargestellt wurde.

Wie zuvor erläutert, kann das Bearbeiten das mechanische, physikalische, chemische oder thermische Bearbeiten bzw. Kombinationen dieser Bearbeitungsmethoden umfassen.

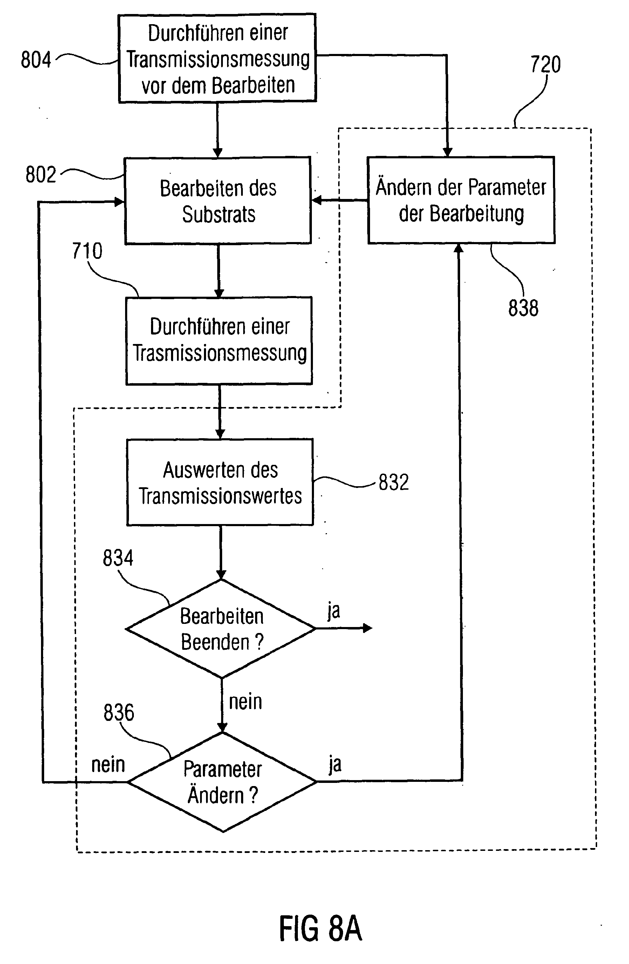

Fig. 8A zeigt ein detaillierteres Flussdiagramm eines Ausführungsbeispiels eines Verfahrens gemäß Fig. 7 mit den Schritten 710 Durchführen einer Transmissionsmessung und 720 Steuern des Bearbeitens (siehe Bereich der Strichlinie).

Dabei wird in Fig. 8A eine Möglichkeit der Realisierung des Schritts 720 dargestellt.

In Schritt 802 wird das Substrat bzw. das Substratmaterial unter bestimmten Bearbeitungs- bzw. Prozessparametern bearbeitet. In dem Ausführungsbeispiel des Polierens des Substrats sind diese Bearbeitungsparameter, wie zuvor genannt, beispielsweise Substratdurchmesser oder Substratgröße, Fabrikat der Poliersuspensionen und Poliertücher, der Anpressdrucke sowie das Material und die Größe der Polierkörner der Poliersuspension. In dem thermischen Auswahlverfahren, wie zuvor dargelegt, sind die Parameter beispielsweise Temperatur, Druck und gegebenenfalls Zusammensetzungen der Atmosphäre. Bei einer Herstellung eines Substrats können diese Parameter beispielsweise die Atmosphärenzusammensetzung, die Temperatur etc. sein.

In Schritt 710 wird die Transmissionsmessung durchgeführt, um einen Transmissionswert zu erzeugen. Dabei kann die Transmissionsmessung 710 beispielsweise nach einem bestimmten gegebenen Zeitintervall des Bearbeitens durchgeführt werden oder beispielsweise nach jedem Bearbeitungszyklus, d. h. beispielsweise im Falle des Polierens, nachdem beispielsweise das ganze oder Teile des Substrats für eine bestimmte Zeit unter bestimmten Bearbeitungsparamtern bearbeitet wurden.

Dabei kann der Schritt 710 Durchführen einer Transmissionsmessung die Messung basierend auf einem monochromatischen Licht, beispielsweise bei 375 nm für GaN, die Gewinnung einer Vielzahl von Transmissionswerten oder eines Transmissionsspektrums umfassen, aus denen bzw. aus dem dann der Transmissionswert für die nachfolgende Steuerung basierend auf einer Funktion, wie zuvor dargestellt, bestimmt wird, oder auch die Erzeugung eines normierten Transmissionswertes, beispielsweise durch Division mit dem Transmissionswert bei 800 nm, wie zuvor für das Beispiel GaN dargestellt, umfassen.

In Schritt 832 wird der Transmissionswert ausgewertet, um beispielsweise eine der zwei Entscheidungen 834 oder 836 zu ermöglichen.

In Schritt bzw. Entscheidung 834 wird entschieden, ob das Bearbeiten des Substrats beendet wird, beispielsweise weil eine bestimmte Qualität des Substrats erreicht wurde. Die Entscheidung kann beispielsweise durch einen Vergleich des aktuell in Schritt 710 gewonnenen Transmissionswertes mit einem Referenztransmissionswert durchgeführt werden, wobei die Bearbeitung dann beendet wird, wenn der aktuelle Transmissionswert gleich oder größer als der Referenztransmissionswert ist.

Dabei kann der Referenztransmissionswert vorgegeben sein, beispielsweise durch vorangegangene Tests bestimmt worden sein. In einem alternativen Ausführungsbeispiel kann jedoch auch durch das Durchführen 804 einer Transmissionsmessung vor dem Bearbeiten ein Referenzwert gewonnen werden, wie dies in den Fig. 2 bis 4 mit der Transmissionskurve "wie gewachsen" dargestellt wurde, um das Verfahren vollkommen unabhängig von vorgegebenen Parametern durchführen zu können. Dabei kann der Referenzwert dem "wie gewachsen"-Transmissionswert genau entsprechen oder beispielsweise abhängig von dem Material und der gewünschten Qualität beispielsweise 5 % über oder unter dem "wie gewachsen" Transmissionswert angesetzt werden.

In einem alternativen Ausführungsbeispiel umfasst das Auswerten 832 des Transmissionswertes und die anschließende Entscheidung 834 über das Beenden des Bearbeitens den Vergleich mit einem oder mehreren zuvor gemessenen Transmissionswerten, wobei die Entscheidung auf einem Vergleich einer Differenz der Transmissionswerte, z.B. zwischen dem aktuell gewonnenen und dem oder den davor gewonnenen Transmissionswerten, basieren kann und das Bearbeiten beendet wird, wenn diese Differenz unter einem gegebenen zweiten Schwellwert liegt. Dabei kann dieser zweite Schwellwert vorgegeben sein, oder durch eine Betrachtung der Entwicklung der Differenzen unter Berücksichtung weiterer, vorangegangener Transmissionswerte bestimmt werden.

In alternativen Ausführungsbeispielen sind andere Auswertungsfunktionen für die Auswertung des Transmissionswertes und der Entscheidung 834 möglich, die eine Sättigung bzw. Abflachung des Transmissionswertes, wie dies in Fig. 4 zuvor erläutert wurde, berücksichtigen, um ein optimales Aufwand/Nutzen-Verhältnis für das Bearbeiten zu erzielen.

Ergibt die Auswertung 832 in Kombination mit der Entscheidung 834, dass das Bearbeiten beendet werden soll, wird das Bearbeiten beendet, wenn nicht, wird in Schritt 836 geprüft, ob die Parameter bzw. Bearbeitungsparameter geändert werden sollen oder beibehalten werden sollen.

Dabei wird in Schritt 832 Auswerten des Transmissionswertes die Entscheidung 836 vorbereitet und kann analog zu der Entscheidung 834 Bearbeiten beenden durch Vergleich mit Referenzwerten oder durch einen Vergleich mit einer mehreren vorangegangenen Transmissionsmessungen oder sogar dem Verlauf mehrerer vorangegangener Transmissionsmessungen erfolgen, um bei Überschreiten eines bestimmten Schwellwerts bzw. bei Erreichen einer gewissen Sättigung die Bearbeitungsparameter zu ändern, um so ein optimales Kosten/Nutzen-Verhältnis bei der Bearbeitung zu erzielen.

Ergibt die Auswertung 832 und die Entscheidung 836 dass die Parameter zu ändern sind, so werden in Schritt 838 die Parameter entsprechend geändert, beispielsweise wie in Fig. 4 dargestellt von einer 3 µm-Politur auf eine 1 µm-Politur gewechselt.

Dabei kann ein Ausführungsbeispiel in Bezug auf die Schritte 832 und 836 so ausgewählt sein, dass beispielsweise basierend auf den gemessenen und im wesentlichen von der Änderung der Defekte abhängigen Änderungen der Transmissionswerte die Bearbeitung mit der 3 µm-Politur schon nach einem Abtrag in einem Bereich von 400 bis 500 nm abgebrochen wird (siehe Sättigung der Transmissionkurve im Bereich ab 400nm in Fig. 4), und schon dann mit einer 1 µm-Politur fortgefahren wird, und nicht erst, wie in Fig. 4 gezeigt, nach einem Abtrag von ca. 700nm.

Sind die Voraussetzungen für eine Entscheidung, dass die Parameter zu ändern sind, nicht erfüllt, so wird das Substrat weiter mit den gleichen Bearbeitungsparametern fortgeführt.

In dem Ausführungsbeispiel gemäß Fig. 8A bilden die Schritte 832, 834, 836 und 838 den Schritt 720 "Steuern des Bearbeitens" aus Fig. 7. Dabei können die Schritte 832, 834 und 836 nacheinander oder gleichzeitig durchgeführt werden.

Aufgrund der in Fig. 8A dargestellten Reihenfolge: Bearbeiten 802 des Substrats, Durchführen 710 einer Transmissionsmessung und Steuern 720 der Bearbeitung, kann dieses Ausführungsbeispiel auch als sequentielles Ausführungsbeispiel in dem Sinne bezeichnet werden, dass erst ein Bearbeitungszyklus beispielsweise mit einer bestimmten Zyklusdauer mit den gleichen Bearbeitungsparametern durchgeführt wird, bevor eine Transmissionsmessung und Entscheidung über die weitere Bearbeitung, d. h. Steuerung, durchgeführt wird.

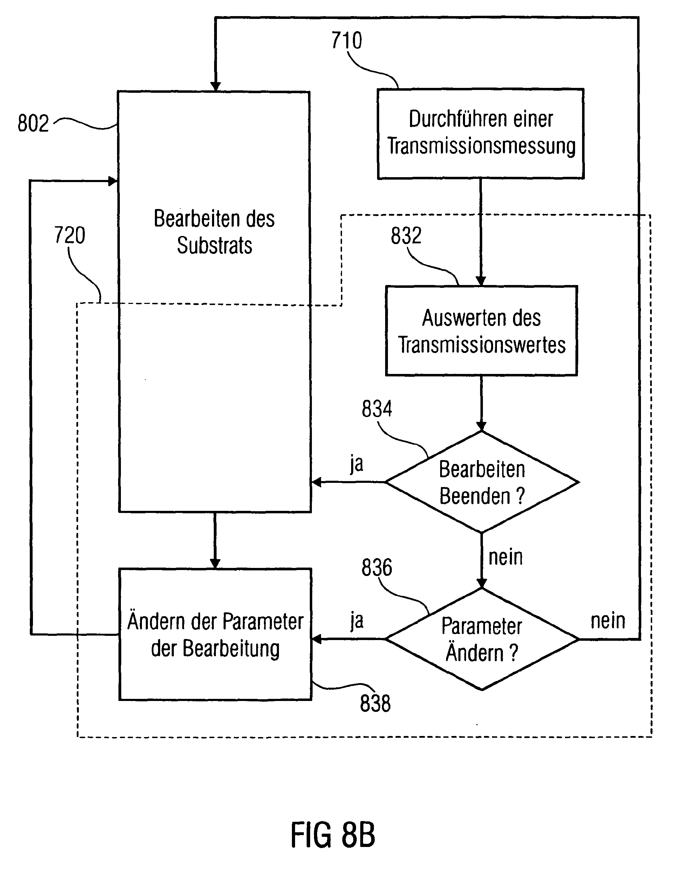

Fig. 8B zeigt ein detaillierteres Flussdiagramm eines alternativen Ausführungsbeispiels, das im Vergleich zu dem von Fig. 8A als paralleles Steuerungsverfahren bezeichnet werden kann, da die Schritte 710 Durchführen einer Transmissionsmessung, 832 Auswerten des Transmissionswertes, 834 "Bearbeiten beenden?" und 836 "Parameter ändern?" parallel zu dem Bearbeiten 802 des Substrats durchgeführt werden. Im Gegensatz zu dem Ausführungsbeispiel in Fig. 8A wird hier also nicht erst beispielsweise ein Bearbeitungszyklus abgeschlossen, sondern Transmissionsmessungen kontinuierlich und parallel zu dem Bearbeiten durchgeführt, die Transmissionswerte ausgewertet und entschieden, ob die Bearbeitung beendet werden soll oder die Parameter geändert bzw. beibehalten werden sollen.

In Bezug auf die Ausführungen bzw. Ausführungsmöglichkeiten der verschiedenen Schritte 832, 834, 836 und 838, die den Schritt 720 Steuern des Bearbeitens gemäß Fig. 7 bilden, gelten die gleichen Überlegungen, wie sie in Fig. 8A ausgeführt wurden. Entsprechend kann auch wie in Fig. 8A ausgeführt, zuvor ein Schritt 804 Durchführen einer Transmissionsmessung vor dem Bearbeiten durchgeführt werden, um einen Referenztransmissionswert zu bestimmen.

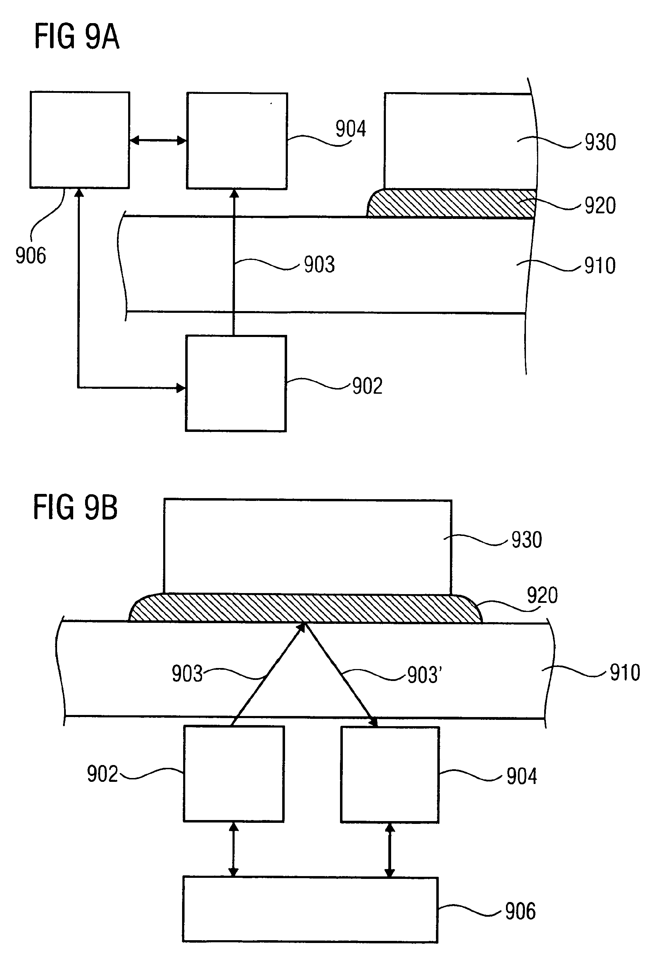

Fig. 9A zeigt eine prinzipielle Darstellung einer so genannten "Durchlicht-Transmissionsmessung", bei dem Lichtquelle 902 und Lichtsensor 904 auf gegenüberliegenden Seiten des Substrats 910 angeordnet sind, wie dies in Fig. 9A durch den Lichtstrahl 903 dargestellt ist.

Fig. 9A zeigt das Substrat 910, das gerade durch eine Vorrichtung 930 zum Polieren bearbeitet wird, wobei zwischen dem Substrat 910 und der Vorrichtung 930 zum Polieren sich das Poliermittel 920 befindet. Die Vorrichtung zum Polieren 930 kann beispielsweise ausgewählt sein, durch Rotation und/oder andere Bewegungen Teile des Substrats 910 oder das gesamte Substrat 910 zu polieren.

Die Lichtquelle 902 kann wie zuvor erläutert, monochromatisches Licht, monochromatisches Licht verschiedener Wellenlängen oder Licht, das einen bestimmten Wellenlängenbereich umfasst, abgeben und durch das Substrat 910 an den Lichtsensor 904 senden. Abhängig von den Defekten, die das Substrat 910 aufweist, wird dabei das Licht 903 stärker oder schwächer absorbiert. In Fig. 9A ist weiterhin die Vorrichtung 906 zum Bestimmen des Transmissionswertes aus dem von dem Lichtsensor 904 empfangenen Lichtsignal dargestellt. Die Vorrichtung 906 ist mit dem Lichtsensor 904 gekoppelt und kann ferner auch mit der Lichtquelle 902 gekoppelt sein, um beispielsweise die Lichtquelle 902 zu steuern. Eine entsprechende Vorrichtung zum Steuern des Bearbeitens abhängig von dem Transmissionswert ist in Fig. 9A nicht gezeigt.

Fig. 9B zeigt eine prinzipielle Darstellung einer Vorrichtung zum Durchführen einer "Reflexions-Transmissionsmessung", bei der die Lichtquelle 902 und der Lichtsensor 904 auf derselben Seite des Substrats 910 angeordnet sind, und das Licht 903, das von der Lichtquelle 902 abgegeben wird, an den Übergängen des Substrats 910 zum Poliermittel 920 und/oder von dem Poliermittel 920 zu der Vorrichtung 930 zum Polieren reflektiert werden, und als reflektierter Lichtstrahl 903' zu dem Lichtsensor 904 gelangen. Funktionsblock 906 stellt wieder die Vorrichtung zum Bestimmen des Transmissionswertes dar. Ebenso, wie in Fig. 9A, ist eine Vorrichtung zum Steuern des Bearbeitens nicht gezeigt.

Die in den Fig. 2 bis 6 dargestellten Transmissionskurven wurden mittels eines "Durchlicht-Transmissionsverfahrens" gewonnen. Bei einem "Reflexions-Transmissionsverfahren" wird der Lichtstrahl 903, 903' stärker absorbiert, da er zweimal durch das Substrat 910 gesendet wird. Daher sehen die Transmissionskurven für diesen Fall entsprechend anders aus, dennoch ist offensichtlich, dass auch hier Ausführungsbeispiele der erfindungsgemäßen Verfahren in entsprechender Weise erfolgreich angewendet werden können.

Bei Ausführungsbeispielen gemäß Fig. 9A (Durchlicht-Transmissionsmessung) kann der Lichtsensor 904 und/oder die Lichtquelle 902 nahe an der Vorrichtung 930 zum Polieren angeordnet werden, um einer lateralen Bewegung der Vorrichtung 930 zum Polieren über das Substrat 910 zu folgen, um beispielsweise die zuvor polierten Bereiche des Substrats 910 zu überprüfen bzw. die Defekte in diesen Bereichen mittels einer Transmissionsmessung zu bestimmen.

Als "in-situ" Messungen werden Messungen bezeichnet, bei denen die sich gerade in Bearbeitung befindende Stelle des Substrats auf ihre Qualität durch eine Lichttransmissionsmessung gemessen wird. Im Gegensatz dazu spricht man von "ex-situ" Messverfahren, wenn die Messung "neben" der eigentlichen Stelle, die gerade bearbeitet wird, gemessen wird.

Entsprechend ermöglichen Reflexions-Transmissionsmessverfahren gemäß Fig. 9B eine in-situ Transmissionsmessung, die sowohl in einem parallelen Verfahren gemäß Fig. 8B als auch in einem sequentiellen Verfahren gemäß Fig. 8A eingesetzt werden kann.

Jedoch können auch Durchlicht-Transmissionsmessverfahren gemäß Fig. 9A eine in-situ Transmissionsmessung ermöglichen, die sowohl in einem parallelen Verfahren gemäß Fig. 8B als auch in einem sequentiellen Verfahren gemäß Fig. 8A eingesetzt werden kann. So kann beispielsweise die Oberflächenbearbeitung durch Läppen statt durch Polieren erfolgen. Beim Läppen wird ein Läppmittel vergleichbar einem Poliermittel genutzt, dieses wird jedoch statt auf einem Tuch auf einer festen Scheibe aufgebracht. Dabei kann dann beispielsweise ein transparentes Scheibenmaterial zum Einsatz kommen, z.B. Glas, so dass bei entsprechender Wahl der Messbereiche die Defektmessung kaum durch die Absorption von Läppmittel und Läppscheibe beeinträchtigt wird.

Durchlicht-Transmissionsmessverfahren gemäß Fig. 9A können mit nichttransparenten bzw. beliebigen Scheiben zudem auf einfache Weise ex-situ Transmissionsmessungen ermöglichen, z.B. für sequentielle Verfahren gemäß Fig. 8A, aber auch für parallele Verfahren gemäß Fig. 8B, jedoch mit der Einschränkung, dass aufgrund der ex-situ Messung nicht die sich gerade in Bearbeitung befindende Substratstelle bzw. Bereich gemessen wird und für die Steuerung verwendet werden kann. In dem Fall, dass beispielsweise der Lichtsensor 904 und/oder die Lichtquelle 902 derart mit der Vorrichtung 930 zum Polieren gekoppelt sind, dass diese die laterale Bewegung der Vorrichtung 930 zum Polieren nachführen bzw. entsprechend nachgeführt werden und die Bereiche des Substrats 910 messen, die gerade zuvor poliert wurden, kann auch von einer quasi-in-situ Messung gesprochen werden.

In alternativen Ausführungsbeispielen können Verfahren zum Bearbeiten eines Substrats auch verwendet werden, um, wie in Fig. 4 dargestellt, effizient den Verlauf der Qualitätsverbesserung bzw. Reduzierung der Defekte pro Iteration bzw. pro Prozessschritt unter Test- bzw. Laborbedingungen zu ermitteln, um beispielsweise empirische Verfahren, die während des Herstellungsprozesses keine Steuerung in Abhängigkeit eines während des Bearbeitens vorgenommenen Transmissionswertmessung vorsehen, zu optimieren. Dabei erfolgt die Optimierung beispielsweise in der Art und Weise, dass für ein bestimmtes Substratmaterial und für bestimmte Produktionsparameter die optimalen Zeitpunkte ermittelt werden, bei denen die Bearbeitungs- bzw. Produktionsparameter geändert werden, bzw. die Bearbeitung beendet wird, um ein optimales Kosten-/Nutzenverhältnis zu erzielen.

In Ausführungsbeispielen des vorliegenden Verfahrens können bei Herstellungsverfahren die Defekte in dem herzustellenden Substratmaterial reduziert werden, indem die Herstellungsparameter basierend auf den Transmissionswerten optimiert werden. Damit kann die Qualität der Substrate erhöht werden bzw. der Ausschuss an Substraten, die gewisse Qualitätsanforderungen in Bezug auf Defektanzahl bzw. -tiefe nicht erfüllen, reduziert werden.

In Ausführungsbeispielen für Verfahren zum Polieren eines Substrats kann sogar ein zweifacher Vorteil erzielt werden. Zum einen kann, wie mit Hilfe der Fig. 4 dargestellt, die Polierung optimiert werden, indem beispielsweise bei Erreichen einer bestimmen "Sättigung" oder eines bestimmten Schwellwertes auf die nächst feinere Politur gewechselt wird, so dass die Polierzeit bzw. die Anzahl der Polierzyklen mit demselben Poliermittel reduziert werden, der Verbrauch an Poliermitteln und Verschleiß an Vorrichtungen zum Polieren reduziert wird, und auch der Materialabtrag des Substrats selbst erheblich reduziert wird. Zum anderen ermöglicht insbesondere letzterer Aspekt, nämlich die Reduzierung des Substratabtrages, wiederum die Verwendung von Substraten einer geringeren Ausgangsschichtdicke unter Beibehaltung einer nach dem Polieren erforderlichen Dicke und/oder Qualität. In anderen Worten, der Herstellungsprozess der Substrate, die in einem nachfolgenden Polierverfahren bearbeitet werden, kann verkürzt werden, da die notwendige Ausgangsschichtdicke, die in dem Herstellungsprozess erreicht werden muss, reduziert werden kann, d. h. Herstellungszeit und Aufwände bzw. Kosten für die Herstellung können im gleichen Maße reduziert werden.

Dies trifft insbesondere bei Materialen wie dem GaN zu, die schwer zu polieren sind.

Wie bereits oben erklärt, wurde GaN nur als Beispiel gewählt, auch bei anderen Materialen können Synthese- oder Bearbeitungsprozesse durch die Messung der Lichtabsorption überwacht, geregelt oder optimiert werden.

In alternativen Ausführungsbeispielen kann anstelle oder zusätzlich zur Messung der Lichttransmission auch ein Transmissionswert für Ultraschallwellen oder allgemein für elektromagnetische Wellen bestimmt werden, wobei die Verfahren in Analogie zu den beschriebenen Ausführungsbeispielen basierend auf den Lichttransmissionsmessung angewendet werden können.

Absorptionsmessungen als Methode zur Untersuchung von Bauteildimensionen oder der Defekte in Materialien sind in der Literatur bekannt.

Im Patent DE000060203377T2 werden solche Messungen beispielsweise als zerstörungsfreie Methode zur Messung der Dicke eines verbundenen Wafers, auch als "bonded wafer" bezeichnet, genutzt. Auch die Kopplung einer solchen auf Absorptionsmessung gestützten Dickenmessung mit Bearbeitungsprozessen ist bereits patentiert: Patent DE000069807287T2 stellt z.B. ein Verfahren und eine Vorrichtung zum Überwachen der Dicke mit einem Mehrwellenlängen-Spektrometer in einem chemisch-mechanischen Polierverfahren vor.

In Bezug auf die Defektanalyse durch Absorptionsmessungen beschreibt z.B. das Patent EP000000250707A2 ein Verfahren und eine Vorrichtung zur Infrarotabsorptionsmessung der Konzentration von mikrokristallinen Fehlern in einem Silizium-Wafer zur Herstellung eines Halbleiterelementes. Es bezieht sich dabei auf im Wafer gelöste Sauerstoff-Verunreinigungen, also punktförmige Materialdefekte, und sagt durch die Messung zweier Sauerstoff-Absorptionspeaks die Bildung von Ausscheidungen bei der Temperung des Wafers voraus. Eine mathematische Formel zur Quantifizierung der Sauerstoff-Defekte wird in JP002002026096AA aufgeführt. Hierbei werden die Absorptionskoeffizienten auf bestimmten Wellenlängen direkt neben bzw. einem charakteristischen Absorptionsmaximum ins Verhältnis gesetzt.

Die charakteristischen Absorptionsspektren gelöster Atome in Halbleitern werden auch zur Quantifizierung anderer Verunreinigung genutzt. Als Beispiele seien hier folgende Patente genannt:
● JP000006011437AA: Nutzung der Peakbreite der IR-Absorption in Si-Wafern unter Flüssig-StickstoffKühlung als Maß für die Borkonzentration.
● JP000005062984AA: Hier wird die Verunreinigungs-Konzentration (Kohlenstoff) ebenfalls durch Peaks der Absorption ermittelt.
● JP002003152043AA: Messung der Stickstoff-Konzentration ebenfalls unter Nutzung charakteristischer Absorptionspeaks.

Auch zur Ermittlung von Versetzungsdichten werden Absorptionsmessungen eingesetzt, z.B. US000005512999A (Methode zur Ermittlung der Versetzungsdichte in GaAs durch Absorptionsmessungen). Da Versetzungen keine charakteristischen Absorptionspeaks verursachen wie atomare Defekte, ist die Absorption über einen breiten Wellenlängenbereich oberhalb der Bandkante verschmiert.

Zusammenfassend kann festgestellt werden, dass die Nutzung der Lichtabsorption zur Messung von Materialdefekten bekannt ist und die Lichtabsorption auch zur Regelung der Bauteildimensionen bei Bearbeitungsprozessen Verwendung findet.

Es ist jedoch nicht bekannt, dass die Eigenschaft vieler Materialien, ihre Absorption mit dem Gehalt an Defekten zu verändern, gezielt zur Optimierung oder Regelung von Synthese- oder Bearbeitungsprozessen in Bezug auf die daraus folgenden *Materialeigenschaften* genutzt würde. Insbesondere wird dieser Effekt nicht zur Optimierung von Oberflächenpräparations-Prozessen genutzt. Des Weiteren ist kein Verfahren oder Gerät beschrieben, das in diesem Sinne in-*situ,* also während der Synthese- oder Bearbeitungsprozesse, zur Prozesskontrolle eingesetzt würde.

Sowohl bei der Herstellung von Werkstoffen oder Bauteilen als auch durch Bearbeitungsprozesse, sei es mittels mechanischer, physikalischer, chemischer, thermischer Verfahren oder deren Kombination, werden jedoch im allgemeinen Materialschädigungen im Werkstoffvolumen hervorgerufen, entweder mehr oder weniger homogen im gesamten Werkstoff oder an den Oberflächen konzentriert.

Da solche Materialschäden üblicherweise unerwünscht sind, werden Verfahren benötigt um deren Ausmaß zu quantifizieren und somit die Vermeidung oder eine kontrollierte Entfernung der Materialschäden zu gewährleisten.

Bei Ausführungsbeispielen des vorliegenden Verfahrens kann mit einer einfachen, preiswerten und robust realisierbaren Messmethode die Materialqualität, welche für viele Bearbeitungs- und Herstellungsprozesse ein zentraler Parameter ist, erfasst werden und auch zur Steuerung der Prozesse genutzt werden.

Kurz formuliert schafft die Erfindung ein Verfahren zur Regelung oder Optimierung der Herstellungs- oder Bearbeitungsprozesse von Materialien und Bauteilen mittels Messung der Lichtabsorption des Materials.

Ausführungsbeispiele der vorliegenden Erfindung schaffen ein Verfahren zum Quantifizieren von Materialfehlern, das Lichttransmissions-Messungen in-situ während der Materialherstellung bzw. -bearbeitung oder ex-situ bei Abwechslung von Materialherstellung bzw. -bearbeitung und Transmissionsmessung durchführt. Dabei kann bei Ausführungsbeispielen aus den Messungen der Lichttransmissionen eine Kenngröße abgeleitet werden, die als Maß für die Zahl der Materialfehler bzw. Defekte dient.

Ferner kann diese Kenngröße genutzt werden, um mittels der Optimierung von Prozessparametern die Materialschäden zu minimieren.

Außerdem kann bei Ausführungsbeispielen der Herstellung bzw. Bearbeitung des Materials dadurch festgelegt werden, dass diese Kenngröße während des Prozesses eine Sättigung erfährt oder einen bestimmten Wert erreicht.

Dabei kann in den Ausführungsbeispielen das Erreichen des Endpunktes genutzt werden, um die Prozessdauer zu minimieren.

Ferner kann bei diesen Ausführungsbeispielen das Erreichen des Endpunkts genutzt werden, um den Abtrag bei einer Materialbearbeitung zu minimieren.

Bei Ausführungsbeispielen kann das Erreichen eines bestimmten Wertes der Kenngröße bei der Oberflächenbearbeitung genutzt werden, um die Tiefe von Oberflächenschäden im Material zu ermitteln, siehe Fig. 1 und Fig. 4.

Bei Ausführungsbeispielen kann die resultierende Minimierung der Bearbeitung insbesondere genutzt werden, um bei schwer bearbeitbaren Materialien die Prozessdauer und den Materialabtrag möglichst gering zu halten.

Ausführungsbeispiele können auch bei Substratmaterialien eingesetzt werden, die durch ihre große Härte schwer bearbeitbar sind.

Ausführungsbeispiele können ferner für Substratmaterialien eingesetzt werden, die chemisch sehr inert und somit schwer bearbeitbar sind.

Bei diesen schwer bearbeitbaren Materialien kann es sich um GaN, AlN, Al₂O₃ oder andere transparente Halbleiter handeln.

Ausführungsbeispiele eignen sich für Substratmaterialien, die in Form einer dünnen Schicht vorliegen.

Alternative Ausführungsbeispiele realisieren ein Verfahren zum Quantifizieren von Materialfehlern durch Lichttransmissions-Messungen, wobei aus der Lichttransmission des Materials eine Kenngröße abgeleitet wird, die als Maß für die Zahl der Materialfehler dient.

Bei Ausführungsbeispielen kann der Wert der Probenlichttransmission durch Integration der Transmissionswerte über einen weiten Spektralbereich bestimmt werden.

In alternativen Ausführungsbeispielen wird die Probentransmission durch monochromatische Messung bei einer Wellenlänge gemessen, bei der das fehlerfreie Material transparenter ist als gestörtes Material.

Ferner eignen sich Ausführungsbeispiele für Substratmaterialien, bei denen es sich um Halbleiter handelt und die Messung bei einer Wellenlänge oberhalb der Bandkante des Materials erfolgt.

Bei Ausführungsbeispielen kann die Probentransmission durch zwei gleichzeitige oder nacheinander erfolgende monochromatische Messungen bei unterschiedlichen Wellenlängen gemessen werden.

Wobei bei Ausführungsbeispielen ferner eine Wellenlänge knapp oberhalb der Bandkante liegen kann und somit stark von der Defektdichte im Material beeinflusst wird, während die zweite Messung weit oberhalb der Bandkante erfolgt und kaum von der Defektdichte, aber von anderen Materialeigenschaften beeinflusst wird. Bei Ausführungsbeispielen kann als Maß für die Defektzahl im Material das Verhältnis der Transmissionen bei den zwei Wellenlängen oder die Differenz der Transmission bzw. Transmissionswerte berechnet werden.

Bei Ausführungsbeispielen kann der ermittelte Wert der Materialqualität als Maß für die Epitaxierbarkeit des Materials herangezogen werden.

Bei weiteren Ausführungsbeispielen kann die monochromatische Messung mit LEDs (light emitting diodes - lichtemittierende Dioden) als Lichtquelle in-situ in der Anlage zur Herstellung oder Bearbeitung des Materials erfolgen.

Ferner können Ausführungsbeispiele die zwei monochromatischen Messungen durch LEDs mit zwei unterschiedlichen Emissionswellenlängen als Lichtquelle in-situ in der Anlage zur Herstellung oder Bearbeitung des Materials erfolgen.

Bei Ausführungsbeispielen kann der Messaufbau für die Transmissionsmessung in einer Oberflächenpräparations-Anlage, beispielsweise einer Polieranlage oder einer thermischen Ausheilungsanlage implementiert sein.

In anderen Ausführungsbeispielen kann der Messaufbau für die Transmissionsmessung in einer Halbleiterzüchtungs-Anlage implementiert sein.

## Patentansprüche

1. Verfahren (700) zum Bearbeiten eines Substrats (910) aus einem Substratmaterial, wobei das Bearbeiten (802) zu Defekten in dem Substratmaterial führt, mit:
Durchführen (710) einer Transmissionsmessung an dem Substrat, um einen Transmissionswert zu erhalten, der ein Maß für die Defekte in dem Substratmaterial ist; und
Steuern (720) des Bearbeitens des Substrats abhängig von dem Transmissionswert.

2. Verfahren nach Anspruch 1, wobei das Maß für die Defekte ein Maß für eine Anzahl und/oder Tiefe der Defekte ist.

3. Verfahren nach Anspruch 1 oder 2, wobei die Transmissionsmessung eine Lichttransmissionsmessung ist und der Transmissionswert ein Lichttransmissionswert ist.

4. Verfahren nach Anspruch 3, wobei die Lichttransmissionsmessung mit Licht im Infrarotbereich, im sichtbaren Bereich und/oder im ultravioletten Bereich erfolgt.

5. Verfahren nach einem der Ansprüche 1 bis 4, wobei die Transmissionsmessung in einem Spektralbereich durchgeführt wird, in dem der Transmissionswert umso höher ist je geringer die Defekte in dem Substratmaterial (910) sind.

6. Verfahren nach einem der Ansprüche 1 bis 5, wobei das Substratmaterial ein Halbleitermaterial ist, und die Transmissionsmessung in einem Spektralbereich durchgeführt wird, der im Bezug auf die Wellenlänge oberhalb einer Bandkante des Halbleitermaterials liegt.

7. Verfahren nach Anspruch 6, wobei eine Untergrenze des Spektralbereichs bezogen auf die Wellenlänge die Bandkante ist und der Spektralbereich 100 nm beträgt.

8. Verfahren nach einem der Ansprüche 1 bis 7, wobei das Substratmaterial GaN, AlN, Al₂O₃ oder andere transparente Halbleitermaterialien sind.

9. Verfahren nach einem der Ansprüche 1 bis 8, wobei die Transmissionsmessung über einen gegebenen Spektralbereich durchgeführt wird und der Transmissionswert gemäß einer gegebenen Funktion aus einer Vielzahl von Einzeltransmissionswerten oder einem Transmissionsspektrum ermittelt wird.

10. Verfahren nach einem der Ansprüche 1 bis 9, wobei die Transmissionsmessung mit einer monochromatischen Lichtquelle durchgeführt wird.

11. Verfahren nach einem der Ansprüche 1 bis 10, wobei das Bearbeiten oft zu einer Änderung der Dicke des Substratmaterials führt und pro Zeiteinheit die Transmissionsmessung mehr aufgrund einer aus der Bearbeitung resultierenden Änderung der Defekte als aufgrund einer aus der Bearbeitung resultierenden Dickenänderung beeinflusst.

12. Verfahren nach Anspruch 11, wobei die Änderung des Transmissionswertes aufgrund der aus der Bearbeitung resultierenden Änderung der Defekte um mehr als ein Faktor 5 höher ist als die aus der Bearbeitung resultierende Änderung der Dicke.

13. Verfahren nach einem der Ansprüche 1 bis 12, bei dem das Bearbeiten ein mechanisches, physikalisches, chemisches und/oder thermisches Bearbeiten eines zuvor hergestellten Substrats ist.

14. Verfahren nach Anspruch 13, bei dem das Bearbeiten das Herstellen des Substrats ist.

15. Verfahren nach einem der Ansprüche 1 bis 14, wobei das Steuern (720) des Bearbeitens umfasst:
Auswerten (832) des Transmissionswertes;
Beenden (834) des Bearbeitens basierend auf der Auswertung (832); oder
Ändern (836) des Bearbeitens basierend auf der Auswertung (832).

16. Verfahren nach Anspruch 15, wobei ein Ändern des Bearbeitens das Ändern von Bearbeitungsparametern umfasst.

17. Verfahren nach Anspruch 15 oder 16, wobei das Bearbeiten (802) beendet wird (834, ja), wenn der Transmissionswert gleich oder größer ist als ein gegebener erster Schwellwert oder eine Änderung des Transmissionswertes gegenüber einem oder mehreren vorhergehenden Transmissionswerten unter einem zweiten Schwellwert liegt; oder
das Bearbeiten (802) geändert wird (836, ja, 838), wenn der Transmissionswert gleich oder größer ist als ein gegebener dritter Schwellwert oder eine Änderung des Transmissionswertes gegenüber einem oder mehreren vorhergehenden Transmissionswerten unter einem vierten Schwellwert liegt.
